# EUROPEAN PATENT APPLICATION

(11) **EP 2 014 716 A1**
(43) Date of publication of application: **14.01.2009**
(21) Application number: 07120715.3
(22) Date of filing: 08.06.2007
(51) Int. Cl.: C08L 23/10, C08L 23/12, C08L 23/06, C08L 23/14, C08L 23/16

(54) **Polymer composition with high impact resistance and high melt strength**

(62) Divisional of application: 07011331.1
(71) Applicant: Borealis Technology Oy, 06101 Porvoo (FI)
(72) Inventor: Pham, Tung, 4040 Linz (AT); Gahleitner, Markus, 4501 Neuhofen/Krems (AT)
(74) Representative: Lux, Berthold

(57) **Abstract**

Polymer composition comprising polypropylene with a branching index g' of 0.9 or less and a low density polyethylene (LDPE).

## Description

The present invention relates to a new polymer composition with high impact resistance and high melt strength, as well as to its use and to articles made out of it.

Well-known polypropylenes of commerce are particularly isotactic, semi-crystalline, thermoplastic polymer mixtures. Although the polypropylenes of commerce have many desirable and beneficial properties, like good resistance to deformation at elevated temperatures, high tensile strength, surface hardness, and good toughness at ambient temperatures, they also possess some important drawbacks such as low melt strength making them unsuitable for many applications, such as for blown films, extrusion coating, foam extrusion and blow-molding. Many efforts have been undertaken to improve the process properties of polypropylene homopolymer. The shortcomings during processing have partially been overcome by the class of high melts strength polypropylene as for instance described in WO 99/16797. Such polymers are featured by the introduction of branchings in the linear polymer backbone. This can be achieved through post-reactor treatment, copolymerization with dienes, and through polymerization with specific catalysts at high temperatures. However this improvement in processability is paid with an undesired loss of toughness and stiffness of the produced materials.

In the last years many approaches have been pursued to find polymers having good processing properties. However in the majority of cases the mechanical properties have been neglected, like for instance to guarantee a good toughness and stiffness of the materials made out of said polymers with improved processing properties.

For instance US 5,368,919 describes inter alia a polymer composition which comprises a polypropylene with a branching index of less than 1 in a propylene polymer resin. Only little information is provided about the material properties made out of the polymer composition.

US 6,103,833 pertains to a process for enhancing the melt strength of a polypropylene homo- or copolymer. However no information is given how mechanical properties can be improved.

EP 0 987 279 A1 is directed to a polymer composition comprising a long-chain branched polypropylene. Said polymer composition is, like the other comparable compositions as discussed above, featured by an improved melt strength compared to the linear polypropylene counterpart. Also in this application the problem of deteriorated mechanical properties caused by the improvement of the process properties is not addressed.

WO 02/051890 A1 is in particular directed to a foam which has been produced from propylene copolymer with improved melt strength and melt drawability. However also this application is silent how to keep the mechanical properties on a high level.

US 6,953,828 B2 describes blends of very low density polyethylene and polypropylene. It is recognized by this patent that the polyethylene component of the blend can improve the toughness of articles. However the processing properties are not very promising.

WO 00/78861 A1 is directed to a propylene polymer composition with improved impact strength by using various polyethylenes of mainly linear structure, like linear low density polyethylene (LLDPE) or high density polyethylene (HDPE). As a further component of the composition a high melt strength polypropylene as described above is suggested. However due to the incorporation of the polyethylene the high melt strength polypropylene have no longer any positive effect during processing. In other words the propylene composition of said patent application has a rather low melt strength.

US 5,898,050 is directed to a polyolefine composition suitable for films. Said composition comprises a common linear polypropylene (as a homopolymer or copolymer) and a polyethylene with a rather low density stressing the predominately linear structure of the same. Such compositions have in particular low melt strength. Also the product properties are not outstanding.

Thus the object of the present invention is to provide a polymer composition having good processing properties as well as good mechanical properties, like toughness and stiffness. It is in particular sought for a polymer composition having a high melt strength (at a high drawability) and good toughness, in particular in terms of a high impact resistance. It is further appreciated that such polymer compositions are additionally featured by a good resistance to deformation, for instance measured by the flexural test. Another object of the present invention is the enabling of the manufacture of articles with the above indicated mechanical properties, like toughness and stiffness, in an economically processing manner. Thus a further object is to provide articles, like foamed articles or blown articles, with good toughness, in particular in terms of a high impact resistance, and a good resistance to deformation, for instance measured by the flexural test. In addition such articles shall be based on polymers, in particular polypropylene compositions, with a high melt strength (at a high drawability).

The finding of the present invention is to provide a polymer composition comprising a branched polypropylene, like Y/H-shaped polypropylene, i.e. a high melt strength polypropylene, and a highly branched polyethylene.

Accordingly the present invention is directed to a polymer composition comprising
(a) a polypropylene (B) with a branching index g' of 0.9 or less,
(b) a low density polyethylene (LDPE), and
(c) optionally a heterophasic propylene copolymer composition (C).

Surprisingly it has been found out that said polymer composition has superior properties compared to polypropylene compositions known in the art. The polymer composition is characterized in particular by the balance of good mechanical and good processing properties. The instant polymer composition has in particular a high melt strength (at high drawability) paired with good toughness, in particular in terms of impact resistance, and good resistance to deformation measured by the flexural test (see tables 2 and 3).

As stated above the present invention requires at least the combination of a polypropylene (B) with a branching index g' of 0.9 or less and a low density polyethylene (LDPE). However in a preferred embodiment the polymer composition additionally comprises a heterophasic propylene copolymer composition (C). Still more preferably the polymer composition comprises the polypropylene (B), the low density polyethylene (LDPE) and optionally the heterophasic propylene copolymer composition (C) as the only polymer components within said polymer composition. Accordingly the present invention defines preferably two embodiments. In the first embodiment the polymer composition comprises the polypropylene (B) with a branching index g' of 0.9 or less and the low density polyethylene (LDPE) as the only polymer components within the said polymer composition. In a second embodiment the polymer composition comprises the polypropylene (B) with a branching index g' of 0.9 or less, the low density polyethylene (LDPE) and the heterophasic propylene copolymer composition (C) as the only polymer components within the said polymer composition

Thus the first mandatory component in the present invention is a polypropylene (B) characterized by a certain degree of branching. Possible polypropylenes (B) are so called Y/H-polypropylenes and for instance described in EP 0 787 750, i.e. single branched polypropylene types (Y polypropylenes having a backbone with a single long side-chain and an architecture resembles a "Y") and polypropylene types in which polymer chains are coupled with a bridging group (an architecture resembles a "H"). Such polypropylenes are characterized by a rather high melt strength. A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference. Thus it is preferred that the branching index g' of the polypropylene (B) shall be less than 0.9, more preferably equal or less than 0.8. In an other preferred embodiment the branching index g' of the polypropylene (B) shall be preferably less than 0.7.

The polypropylene (B) can be a propylene homopolymer or a propylene copolymer, wherein the homopolymer is preferred.

The expression homopolymer used in the instant invention relates to a polypropylene that consists substantially, i.e. of at least 97 wt%, preferably of at least 99 wt%, and most preferably of at least 99.8 wt% of propylene units. In a preferred embodiment only propylene units in the propylene homopolymer are detectable. The comonomer content can be determined with FT infrared spectroscopy, as described below in the examples.

The high degree of branching of the polypropylene (B) contributes also to its melt strength. Accordingly it is preferred that the polypropylene (B) is further characterized by a melt strength of at least 10 cN at a maximum speed of at least 200 mm/s, more preferably by a melt strength of at least 20 cN at a maximum speed of at least 200 mm/s, still more preferably by a melt strength of at least 25 cN at a maximum speed of at least 200 mm/s, yet more preferably by a melt strength of at least 25 cN at a maximum speed of at least 250 mm/s. The measuring of the melt strength has been undertaken by a temperature of 200 °C with an acceleration of the melt strand drawn down of 120 mm/sec². The exact measuring method is defined in the example section.

Further it is preferred that the polypropylene has a rather low melt flow rate. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as MFR₂ (230 °C). On the other hand, the melt flow rate measured under a load of 2.16 kg at 190 °C (ISO 1133) is denoted as MFR₂ (190 °C). Accordingly, it is preferred that in the present invention the polypropylene (B) has an MFR₂ (230 °C) in a range of 0.05 to 10.00 g/10 min, more preferably of 1.0 to 8.0 g/10 min, still more preferably of 1.5 to 6.0 g/10 min.

Preferably the cross-linked fraction of the polypropylene (B) does not exceed 1.0 wt.-%, even more preferred does not exceed 0.8 wt.-%, still more preferred does not exceed 0.5 wt.-% determined as the relative amount of polymer insoluble in boiling xylene (xylene hot insoluble fraction, XHI).

The polypropylene can be preferably further defined by the way obtained. Accordingly the polypropylene (B) is the result of treating an unmodified polypropylene (A) with thermally decomposing radical-forming agents and/or with ionizing radiation, where both treatments may optionally be accompanied or followed by a treatment with bi- or multifunctionally unsaturated monomers, e.g. butadiene, isoprene, dimethylbutadiene or divinylbenzene. A suitable method to obtain the polypropylene (B) is for instance disclosed in EP 0 879 830 A1 and EP 0 890 612 A2. Both documents are herewith included by reference. Thereby, the amount of peroxide is preferably in the range of 0.05 to 3.00 wt.-% based on the unmodified polypropylene (A).

The unmodified polypropylene (A) has preferably a MFR₂ (230 °C) in a range of 0.05 to 45.00 g/10 min. More preferably the MFR₂ (230 °C) is in a range of 0.05 to 35.00 g/10 min in case the unmodified polypropylene (A) is a homopolymer. On the other hand the MFR₂ (230 °C) is in a range of 0.05 to 45.00 g/10 min in case the unmodified polypropylene (A) is a copolymer.

Preferably the unmodified polypropylene (A) has of 85.0 to 99.9 wt.-% of propylene and 0.1 to 15.0 wt.-% of α-olefins with 2 or 4 to 18 carbon atoms, in particular ethylene.

Moreover unmodified polypropylene (A) has preferably a rather broad molecular weight distribution (MWD), more preferably the unmodified polypropylene (A) is multimodal, even more preferred bimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be seen at a super-imposing of the molecular weight distribution curves of the polymer fraction which will, accordingly, show a more distinct maxima, or at least be distinctively broadened compared with the curves for individual fractions.

A polymer showing such molecular weight distribution curve is called bimodal or multimodal, respectively.

As stated above the unmodified polypropylene (A) is preferably multimodal, more preferably bimodal. Accordingly it is preferred that the unmodified polypropylene (A) has a molecular weight distribution (MWD) of 5 to 60, more preferably in the range of 15 to 35.

Moreover the unmodified polypropylene (A) has preferably a weight average molecular weight (M_{w}) of 500,000 to 1,500,000 g/mol, more preferably in the range of 600,000 to 1,000,000 g/mole. The number average molecular weight (Mₙ) preferably ranges of 25,000 to 100,000 g/mol and more preferably of 30,000 to 100,000 g/mol.

The number average molecular weight (Mn) and the weight average molecular weight (Mw) as well as the molecular weight distribution (MWD) are determined in the instant invention by size exclusion chromatography (SEC) using Waters Alliance GPCV 2000 instrument with online viscometer. The oven temperature is 140 °C. Trichlorobenzene is used as a solvent (ISO 16014).

Additionally it is appreciated that the unmodified polypropylene (A) has a grain size of 0.001 to 7.000 mm.

The peroxide used for the manufacture of polypropylene (B) is preferably a thermally decomposing free radical-forming agent, more preferably selected from the group consisting of acyl peroxide, alkyl peroxide, hydroperoxide, perester and peroxycarbonate.

The following listed peroxides are in particular preferred:
Acyl peroxides: benzoyl peroxide, 4-chlorobenzoyl peroxide, 3-methoxybenzoyl peroxide and/or methyl benzoyl peroxide.
Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.
Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate;
Or mixtures of these above listed free radical-forming agents.

If present in the process for the manufacture of the polypropylene (B), the (volatile) bifunctional monomers are preferably ethylenically unsaturated, multifunctional monomers, like C4 to C10 dienes and/or C7 to C10 divinyl compounds. Especially preferred bifunctional monomers are butadiene, isoprene, dimethylbutadiene and divinylbenzene.

Preferably the polypropylene (B) is produced from the unmodified polypropylene (A) as defined above under process conditions as defined in detail below.

The second mandatory component of the instant polymer composition is a low density polyethylene (LDPE). Low density polyethylenes are well known in the art. In low density polyethylene, the ethylene molecules are linked in random fashion, with the main chains having side branches. This branching prevents the formation of a closely knit pattern, resulting in material mat is relatively soft, flexible and tough and which will withstand moderate heat. This term generally includes a polyethylene ranging in density from 910 to 940 kg/m³, more preferably from 910 to 925 kg/m³. Furthermore it is preferred that the low density polyethylene (LDPE) of the instant invention has a melt flow rate MFR₂ (190 °C) from 0.10 to 10.00 g/10min, more preferably from 0.20 to 3.00 g/10min.

The polymer composition comprising the two mandatory components as defined above can be further seen as multiphase structure, i.e. as a heterophasic system. In the present invention the polymer composition as the multiphase structure preferably comprises the polypropylene (B) as the matrix and the low density polyethylene (LDPE) making the inclusions dispersed in said matrix.

In a further embodiment the polymer composition of the instant invention does not only comprise the polypropylene (B) and the low density polyethylene (LDPE), but also additionally a heterophasic propylene copolymer composition (C).

Such a heterophasic propylene copolymer composition (C) comprises a propylene matrix and an elastormer, preferably an ethylene-propylene-rubber (EPR). Accordingly the heterophasic propylene copolymer composition (C) of the present invention contains in particular ethylene (and/or possibly higher α-olefins, like butene) as comonomer. Its production is normally carried out in a two stage process, resulting in a multiphase structure with a propylene homopolymer matrix and/or propylene copolymer matrix and inclusions consisting of (amorphous) ethylene-propylene-rubber (EPR) and optionally crystalline polyethylene.

The comonomer content, like ethylene, in the heterophasic propylene copolymer composition (C) is preferably up to 50.0 wt.-%, even more preferred up from 5 to 25 wt.-%.

Moreover the heterophasic propylene copolymer composition (C) has a MFR₂ (230 °C) in a range of 0.1 to 40.0 g/10min, and more preferably in the range of 0.5 to 10.0 g/10min.

The propylene polymer matrix of the heterophasic propylene copolymer composition (C), as stated above, must contain at least one polypropylene; however it is preferred for the matrix to contain two or more propylene polymers. Where the propylene polymer matrix comprises two or more different propylene polymers these may be polymers with different monomer make up and/or with different molecular weight distributions. These components may have identical or differing monomer compositions and tacticities.

The propylene polymer matrix may be produced in a polymerization stage effected in one or more polymerization reactors or by blending two or more compatible polymers having the desired molecular weight distributions or monomer make ups. Desirably a propylene polymer matrix comprising two or more different propylene polymers may be produced by the use of two or more catalyst types in a one-reactor polymerization or alternatively by carrying out polymerization in two or more different polymerisation reactors (e.g. bulk and/or gas phase reactors; as bulk reactors, loop reactors are preferred) whereby to generate matrix polymers of the different desired molecular weight distributions or monomer make ups in the different polymerization reactors. This latter approach is preferred.

As stated above the propylene polymer matrix will preferably be a propylene homopolymer or propylene copolymer or a mixture thereof. Where it comprises a copolymer, the comonomers may include monomers copolymerizable with propylene, for example comonomers such as ethylene and C4 to C20 α-olefins, in particular ethylene and C4 to C10 α-olefins, e.g. 1-butene or 1-hexene. Preferably, where a copolymer component is present this will be a relatively high molecular weight random copolymer. The comonomer content is preferably relatively low, i.e. up to 8.0 wt.-%, more preferably 0.0 to 5.0 wt.-%, still more preferably 1.0 to 4.0 wt.-%.

Preferably the propylene polymer matrix is bimodal. Such a bimodal propylene polymer matrix may comprise a propylene homopolymer and/or a propylene copolymer, preferably the bimodal propylene polymer matrix comprise a propylene homopolymer only. In another preferred embodiment the bimodal propylene polymer matrix, is preferably the higher molecular weight component a homopolymer or a random copolymer while the lower molecular weight component is preferably a higher crystallinity homopolymer. The propylene polymer matrix is thus preferably a combination of a high molecular weight homopolypropylene or propylene random copolymer (e.g. with C2 or C4 to C10 α-olefin comonomers) and a low to moderate molecular weight, higher crystallinity propylene homopolymer.

The production of polymers having the desired properties for propylene polymer matrix may be achieved using techniques well known to those skilled in the art, e.g. by appropriate selection of catalyst systems (e.g. Ziegler Natta catalysts or metallocene or other single site catalysts), comonomers, polymerization reactor type and polymerization process conditions. Particularly preferably the matrix polymer is produced in a polymerization process using a supported Ziegler Natta catalyst system (especially a high yield Ziegler Natta system containing Ti, Cl, Mg and Al). Metallocene catalysts may also be used.

The propylene polymer matrix may constitute 30 to 90 wt.-%, more preferably 70 to 80 wt.-% of the overall heterophasic propylene copolymer composition (C).

The second component of the heterophasic propylene copolymer composition (C) of the inventive polymer composition is an elastomer, more preferably an ethylene-propylene rubber (EPR).

The elastomer according to this invention is preferably an α-olefin polymer, in particular a propylene polymer, more particularly a propylene copolymer with one or more copolymerizable monomers, e.g. as described above, particularly ethylene. The comonomer content, preferably the ethylene content, is desirably relatively high e.g. up to 50 wt.-%, preferably 25 to 45 wt.-%, more preferably 30 to 40 wt.-%. Preferably the elastomer is an ethylene-propylene rubber, in particular with an ethylene content as defined in this paragraph.

As with the matrix polymer, the elastomer may be produced by conventional gas phase α-olefin polymerization techniques; however it is preferably produced using a supported catalyst system, e.g. a Ziegler Natta catalyst system or a metallocene : alumoxane catalyst system.

The elastomer will constitute up to 70 wt.-%, more preferably 5 to 30 wt.-%, still more preferably 6 to 18 wt.-% of the heterophasic propylene copolymer composition (C).

The elastomer may be blended in with the matrix polymer. However, more desirably it is produced by performing a second polymerization stage in the presence of particles of matrix polymer, e.g. as a second polymerization stage of a multistage polymerization. Preferably the combination of the matrix and elastomer polymers is produced in a two stage polymerization using two or more polymerization reactors, more preferably using bulk and gas phase reactors (especially fluidized bed gas phase reactors) especially preferably using a loop reactor followed by two gas phase reactors or by a loop and a gas phase reactor. In such a procedure, the catalyst system used may be varied between stages but is preferably the same for all stages. Especially preferably a prepolymerized heterogeneous (i.e. supported) catalyst is used.

While the catalyst may be a metallocene, it is preferred to use Ziegler Natta catalysts, e.g. an inorganic halide (e.g. MgCl₂) supported titanium catalyst, together with an aluminium alkyl (e.g. triethylaluminium) cocatalyst. Silanes, e.g. dicyclopentanedimethoxysilane (DCPDMS) or cyclohexylmethyldimethoxysilane (CHMDMS), may be used as external donors. Such catalyst systems are described in EP 0 491 566 A1, the contents whereof are hereby incorporated by reference.

The inventive polymer composition comprising the above defined components (polypropylene (B), LDPE, optionally heterophasic composition (C)) is preferably further specified by its melt flow rate. Accordingly the polymer composition has preferably a MFR₂ (230 °C) of 1.0 to 100 g/10min, more preferably of 1 to 50 g/10min, still more preferably in the range of 1 to 20 g/10min, yet more preferably of 1 to 10 g/10min.

Especially good results are obtained in case the inventive polymer composition comprises the components in specific ranges. Accordingly it is preferred that the polymer composition comprises
(a) at least 5.0 wt.-%, more preferably at least 15.0 wt.-%, of the polypropylene (B),
(b) at least 10 wt.-%, more preferably at least 15.0 wt.-%, of the low density polyethylene (LDPE), and
(c) optionally up to 70 wt.-% of the heterophasic propylene copolymer composition (C),
wherein the weight percentages are based on the polymer components present in the polymer composition only. Still more preferably the inventive polymer composition comprises as polymer components only the components polypropylene (B), low density polyethylene (LDPE) and optionally heterophasic propylene copolymer composition (C) in this paragraph indicated ranges.

In case the polymer composition does not contain a heterophasic propylene copolymer composition (C) it is preferred that the polymer composition comprises
(a) at least 40.0 wt.-%, more preferably at least 60.0 wt.-%, still more preferably in the range of 50 to 80 wt.-% yet more preferably in the range of 65 to 75 wt.-%, of the polypropylene (B), and
(b) at least 20 wt.-%, more preferably at least 25.0 wt.-%, still more preferably in the range of 20 to 50 wt.-%, yet more preferably in the range of 25 to 35 wt.-% of the low density polyethylene (LDPE),
wherein the weight percentages are based on the polymer components present in the polymer composition only. Still more preferably the inventive polymer composition comprises as polymer components only the components polypropylene (B) and low density polyethylene (LDPE) in this paragraph indicated ranges.

In case the polymer composition contains a heterophasic propylene copolymer composition (C) it is preferred that the polymer composition comprises
(a) at least 5.0 wt.-%, more preferably at least 10.0 wt.-%, still more preferably in the range of 10 to 50 wt.-% yet more preferably in the range of 15 to 55 wt.-%, of the polypropylene (B), and
(b) at least 10 wt.-%, more preferably at least 15.0 wt.-%, still more preferably in the range of 15 to 40 wt.-%, yet more preferably in the range of 15 to 35 wt.-%, of the low density polyethylene (LDPE), and
(c) up to 70 wt.-%, more preferably up to 55 wt.-%, still more preferably in the range of 20 to 70 wt.-%, yet more preferably in the range of 30 to 65 wt.-%, the heterophasic propylene copolymer composition (C),
(d) preferably with the proviso that the amount of LDPE does not exceed the amount of polypropylene (B) and/or the amount of the heterophasic propylene copolymer composition (C),
wherein the weight percentages are based on the polymer components present in the polymer composition only. Still more preferably the inventive polymer composition comprises as polymer components only the components polypropylene (B), low density polyethylene (LDPE) and heterophasic propylene copolymer composition (C) in this paragraph indicated ranges.

Preferably the polymer composition of the instant invention is characterized by a specific flexural modulus. Accordingly it is appreciated that the polymer composition as defined in the instant invention has flexural modulus of at least 900 MPa, more preferably of at least 1000 MPa, measured according to ISO 180.

Additionally the polymer composition as defined herein has a rather high impact strength. Accordingly the inventive polymer composition has an impact strength measured according to the Charpy impact test according to ISO 179 (1eA) at 23 °C of at least 20.0 kJ/m², more preferably of at least 50.0 kJ/m², yet more preferably of at least 55.0 kJ/m², and/or impact strength measured according to the Charpy impact test according to ISO 179 (1eA) at -20 °C of at least 3.5 kJ/m², more preferably of at least 5.0 kJ/m².

Considering the above definitions of the components of the inventive polymer composition the following embodiments are in particular preferred:

In case the polymer composition does not contain a heterophasic propylene copolymer composition (C) it is in particular preferred that the polymer composition comprises
(a) at least 40.0 wt.-%, preferably at least 60.0 wt.-%, more preferably in the range of 50 to 80 wt.-% yet more preferably in the range of 65 to 75 wt.-%, of the polypropylene (B) (based on the polymer components present in the polymer composition only), wherein the polypropylene (B) has
   (i) a branching index g' of less than 0.9, more preferably less than 0.8, still more preferably less than 0.7,
      and/or
   (ii) a melt strength of at least 20 cN at a maximum speed of at least 200 mm/s, preferably a melt strength of at least 25 cN at a maximum speed of at least 200 mm/s, more preferably a melt strength of at least 25 cN at a maximum speed of at least 250 mm/s,
      and/or
   (iii) a MFR₂ (230 °C) in a range of 0.05 to 10.00 g/10 min, preferably of 1.0 to 8.0 g/10 min, more preferably of 1.5 to 6.0 g/10 min,
      and/or
   (iv) a cross-linked fraction not exceeding 1.0 wt.-%, more preferred not exceeding 0.8 wt.-%,
   and
(b) at least 20 wt.-% .-%, more preferably at least 25.0 wt.-%, still more preferably in the range of 20 to 50 wt.-%, yet more preferably in the range of 25 to 35 wt.-% of the low density polyethylene (LDPE) (based on the polymer components present in the polymer composition only), wherein the low density polyethylene (LDPE) has
   (i) a density from 910 to 940 kg/m³, preferably from 910 to 925 kg/m³,
      and/or
   (ii) a melt flow rate MFR₂ (190 °C) from 0.10 to 10.00 g/1Omin preferably from 0.20 to 3.00 g/10min,
and preferably the polymer composition is a heterophasic system in which the polypropylene (B) is the matrix and the low density polyethylene (LDPE) making the inclusions dispersed in said matrix.

In case the polymer composition contains a heterophasic propylene copolymer composition (C) it is in particular preferred that the polymer composition comprises
(a) at least 5.0 wt.-%, more preferably at least 10.0 wt.-%, still more preferably in the range of 10 to 50 wt.-% yet more preferably in the range of 15 to 55 wt.-%, of the polypropylene (B) (based on the polymer components present in the polymer composition only), wherein the polypropylene (B) has
   (i) a branching index g' of less than 0.9, more preferably less than 0.8, still more preferably less than 0.7,
      and/or
   (ii) a melt strength of at least 20 cN at a maximum speed of at least 200 mm/s, preferably a melt strength of at least 25 cN at a maximum speed of at least 200 mm/s, more preferably a melt strength of at least 25 cN at a maximum speed of at least 250 mm/s,
      and/or
   (iii) a MFR₂ (230 °C) in a range of 0.05 to 10.00 g/10 min, preferably of 1.0 to 8.0 g/10 min, more preferably of 1.5 to 6.0 g/10 min,
      and/or
   (iv) a cross-linked fraction not exceeding 1.0 wt.-%, more preferred not exceeding 0.8 wt.-%,
   and
(b) at least 10 wt.-%, more preferably at least 15.0 wt.-%, still more preferably in the range of 15 to 40 wt.-%, yet more preferably in the range of 15 to 35 wt.-%, of the low density polyethylene (LDPE) (based on the polymer components present in the polymer composition only), wherein the low density polyethylene (LDPE) has
   (i) a density from 910 to 940 kg/m³, preferably from 910 to 925 kg/m³, and/or
   (ii) a melt flow rate MFR₂ (190 °C) from 0.10 to 10.00 g/10min, preferably from 0.20 to 3.00 g/10min,
   and
(c) up to 70 wt.-%, more preferably up to 55 wt.-%, still more preferably in the range of 20 to 70 wt.-%, yet more preferably in the range of 30 to 65 wt.-%, the heterophasic propylene copolymer composition (C) (based on the polymer components present in the polymer composition only), wherein the heterophasic propylene copolymer composition (C)
   (i) has a MFR₂ (230 °C) in a range of 0.1 to 40.0 g/10min, preferably in the range of 0.5 to 10.0 g/10min
      and/or
   (ii) has a density in the range of 900 to 920 kg/m³, preferably in the range of 900 to 910 kg/m³.
   preferably with the proviso that the amount of LDPE does not exceed the amount of polypropylene (B) and/or the amount of the heterophasic propylene copolymer composition (C).

Moreover the present invention is directed to a process for the manufacture of the inventive polymer composition.
(a) Accordingly, the polymer composition in accordance with the present invention may be prepared by compounding the components within suitable melt mixing devices for preparing polymeric compounds, including in particular extruders single screw extruders as well as twin screw extruders. Other suitable melt mixing devices include planet extruders and single screw co-kneaders. Especially preferred are twin screw extruders including high intensity mixing and kneading sections. Suitable melt temperatures for preparing the compositions are in the range from 170 to 300 °C, preferably in the range from 200 to 260 °C.

The polypropylene (B) is preferably obtained by a process as described in EP 0 879 830 A1 and EP 0 890 612 A2. Both documents are herewith included by reference. Accordingly the polypropylene is produced by
(a) mixing
   (i) a unmodified propylene homopolymer and/or copolymer (A) as defined above, preferably a unmodified propylene homopolymer with a weight average molecular weight (M_{w}) of 500,000 to 1,500,000 g/mol,
   (ii) from 0.05 to 3 wt.-% based on the components of (i) and (ii), of a peroxide selected from the group consisting of acyl peroxide, alkyl peroxide, hydroperoxide, perester and peroxycarbonate, and
   (iii) optionally diluted with inert solvents,
(b) heating to 30-100 °C, preferably to 60-90 °C,
(c) sorption of volatile bifunctional monomers, preferably ethylenically unsaturated, multifunctional monomers, like C4 to C10 dienes and/or C7 to C10 divinyl compounds, by the unmodified propylene homopolymer and/or copolymer (A), preferably unmodified propylene homopolymer (A), from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the propylene homopolymer (A),
(d) heating and melting the polypropylene composition in an atmosphere comprising inert gas and/or the volatile bifunctional monomers, from sorption temperature to 210 °C, whereupon the free-radical generators are decomposed and then
(e) heating the melt up to 280 °C in order to remove unreacted monomers and decomposition products, and
(f) agglomerating the melt.

Usual amounts of auxiliary substances, which may range from 0.01 to 2.5% by weight of stabilizers, 0.01 to 1% by weight of processing aids, 0.1 to 1% by weight of antistats, 0.2 to 3% by weight of pigments and up to 3% by weight of α-nucleating agents, in each case based on the sum of the propylene polymers, may be added before step a) and/or f) of the method and/or before or during step d) and/or e) of the above described method.

The process for producing the modified propylene polymer preferably is a continuous method, performed in continuous reactors, mixers, kneaders and extruders. Batchwise production of the modified propylene polymer, however is feasible as well.

Practical sorption times τ of the volatile bifunctional monomers range from 10 to 1000 s, where sorption times τ of 60 to 600 are preferred.

The invention is also directed to the use of the inventive polymer composition. Accordingly the present invention is directed to the use of the polymer composition as defined in the instant invention for foaming, extrusion coating and blow moulding, like extrusion blow moulding. Thus the present invention is in particular directed to the use of the polymer composition of the instant invention as part of a foam, a film or a blown article.

Furthermore the present invention is directed to articles comprising the polymer composition of the instant invention. Accordingly the present invention is in particular directed to a foam, a film or a blown article comprising the polymer composition as defined above in the present invention.

With regard to the above described invention the following embodiments are particularly preferred:
- Paragraph 1:: Polymer composition comprising
(a) polypropylene (B) with a branching index g' of 0.9 or less, and
(b) a low density polyethylene (LDPE).
- Paragraph 2:: Polymer composition according to paragraph 1, wherein the polypropylene (B) is a propylene homopolymer.
- Paragraph 3:: Polymer composition according to paragraph 1 or 2, wherein the polypropylene (B) has a melt strength of at least 10 cN at a maximum speed of at least 200 mm/s.
- Paragraph 4:: Polymer composition according to any one of the preceding paragraphs 1 to 3, wherein the polypropylene (B) has melt strength of at least 20 cN at a maximum speed of at least 200 mm/s.
- Paragraph 5:: Polymer composition according to any one of the preceding paragraphs 1 to 4, wherein the polypropylene (B) has a MFR₂ (230 °C) in a range of 0.05 to 10.00 g/10 min measured according to ISO 1133.
- Paragraph 6:: Polymer composition according to any one of the preceding paragraphs 1 to 5, wherein the polypropylene (B) has been obtained by treating an unmodified polypropylene (A) with a peroxide and optionally with a bifunctional monomer.
- Paragraph 7:: Polymer composition according to paragraph 6, wherein the unmodified polypropylene (A) has a weight average molecular weight M_{w} of 500,000 to 1,500,000 g/mol measured according to ISO 16014.
- Paragraph 8:: Polymer composition according to paragraph 6 or 7, wherein the unmodified polypropylene (A) has a molecular weight distribution (MWD) of 5 to 60 measured according to ISO 16014.
- Paragraph 9:: Polymer composition according to any one of the preceding paragraphs 6 to 8, wherein the unmodified polypropylene (A) has a MFR₂ (230 °C) in a range of 0.05 to 45.00 g/10 min measured according to ISO 1133.
- Paragraph 10:: Polymer composition according to any one of the preceding paragraphs 6 to 9, wherein the unmodified polypropylene (A) is a propylene homopolymer.
- Paragraph 11:: Polymer composition according to any one of the preceding paragraphs 6 to 10, wherein the bifunctional monomer is selected from the group consisting of butadiene, isoprene, dimethylbutadiene and divinylbenzene.
- Paragraph 12:: Polymer composition according to any one of the preceding paragraphs 6 to 11, wherein the peroxide is selected from the group consisting of acyl peroxide, alkyl peroxide, hydroperoxide, perester and peroxycarbonate.
- Paragraph 13:: Polymer composition according to any one of the preceding paragraphs 6 to 12, wherein the amount of peroxide is in the range of 0.05 to 3.00 wt.-% based on the unmodified polypropylene
- Paragraph 14:: Polymer composition according to any one of the preceding paragraphs 1 to 13, wherein the cross-linked fraction of the polypropylene (B) does not exceed 1.0 wt.-%.
- Paragraph 15:: Polymer composition according to any one of the preceding paragraphs 1 to 14, wherein the low density polyethylene (LDPE) has a MFR₂ (190 °C) in a range of 0.10 to 10.00 g/10 min measured according to ISO 1133.
- Paragraph 16:: Polymer composition according to any one of the preceding paragraphs 1 to 15, wherein the low density polyethylene (LDPE) has a density in the range of 910 to 940 kg/m³.
- Paragraph 17:: Polymer composition according to any one of the preceding paragraphs 1 to 16, wherein the composition comprises additionally
(c) a heterophasic propylene copolymer composition (C).
- Paragraph 18:: Polymer composition according to paragraph 17, wherein the comonomer of the heterophasic copolymer composition (C) is ethylene and/or butene.
- Paragraph 19:: Polymer composition according to paragraph 17 or 18, wherein the comonomer content in the heterophasic propylene copolymer composition (C) is up to 50.0 wt.-%.
- Paragraph 20:: Polymer composition according to paragraphs 17 to 19, wherein the heterophasic propylene copolymer composition (C) has a MFR₂ (230 °C) in a range of 0.1 to 40.00 g/10 min measured according to ISO 1133.
- Paragraph 21:: Polymer composition according to paragraphs 17 to 20, wherein the heterophasic copolymer composition (C) comprises
(a) a propylene polymer matrix and
(b) an ethylene-propylene-rubber (EPR).
- Paragraph 22:: Polymer composition according to paragraph 21, wherein the heterophasic propylene copolymer composition (C) comprises up to 30 wt.-% ethylene-propylene-rubber (EPR).
- Paragraph 23:: Polymer composition according to paragraph 21 or 22, wherein the propylene polymer matrix is a propylene homopolymer
- Paragraph 24:: Polymer composition according to paragraph 21 or 22, wherein the propylene polymer matrix is a propylene copolymer.
- Paragraph 25:: Polymer composition according to paragraph 24, wherein the comonomer content in the propylene polymer matrix is up to 8.0 wt-%.
- Paragraph 26:: Polymer composition according to any one of the preceding paragraphs 21 to 25, wherein the ethylene content in the ethylene-propylene-rubber (EPR) is up to 50 wt.-%.
- Paragraph 27:: Polymer composition according to any one of the preceding paragraphs 1 to 26, wherein said composition comprises
(a) at least 5.0 wt.-% of the polypropylene (B),
(b) at least 20 wt.-% of the low density polyethylene (LDPE), and
(c) optionally up to 70 wt.-% the heterophasic propylene copolymer composition (C),
wherein the weight percentages are based on the polymer components present in the polymer composition, preferably on the components of (a), (b) and (c).
- Paragraph 28:: Polymer composition according to any one of the preceding paragraphs 1 to 27, wherein the polymer composition has a MFR₂ (230 °C) in a range of 1.0 to 100.0 g/10 min measured according to ISO 1133.
- Paragraph 29:: Polypropylene composition according to any one of the preceding paragraphs 1 to 28, wherein the polymer composition has flexural modulus of at least 900 MPa measured according to ISO 180.
- Paragraph 30:: Polymer composition according to any one of the preceding paragraphs 1 to 29, wherein the polymer composition has impact strength measured according to the Charpy impact test according to ISO 179 (1eA) at 23 °C of at least 50.0 kJ/m² and/or impact strength measured according to the Charpy impact test according to ISO 179 (1eA) at -20 °C of at least 5.0 kJ/m².
- Paragraph 31:: Use of a polymer composition according to any one of the preceding paragraphs 1 to 30 for foaming, extrusion coating and blow moulding, like extrusion blow moulding.
- Paragraph 32:: Use of a polymer composition according to any one of the preceding paragraphs 1 to 31 as part of a foam, a film or a blown article.
- Paragraph 33:: Process for the manufacture of a polymer composition according to any one of the preceding paragraphs 1 to 30 comprising the step of mixing
(a) the propylene homopolymer (B),
(b) the low density polyethylene (LDPE), and
(c) optionally the heterophasic propylene copolymer composition (C).
- Paragraph 34:: Process according to paragraph 33, wherein the propylene homopolymer (B) is produced by
(a) mixing
   (i) a unmodified propylene homopolymer (A) or unmodified propylene copolymer (A), preferably a unmodified propylene homopolymer with a weight average molecular weight M_{w} of 500,000 to 1,500,000 g/mol,
   (ii) from 0.05 to 3 wt.-% based on the components of (i) and (ii), of a peroxide selected from the group consisting of acyl peroxide, alkyl peroxide, hydroperoxide, perester and peroxycarbonate, and
   (iii) optionally diluted with inert solvents,
(b) heating to 30-100 °C, preferably to 60-90 °C,
(c) sorption of volatile bifunctional monomers, preferably ethylenically unsaturated, multifunctional monomers, like C4 to C10 dienes and/or C7 to C10 divinyl compounds, by the propylene homopolymer (A) from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the unmodified propylene homopolymer
   (A) or unmodified propylene copolymer (A),
(d) heating and melting the polypropylene composition in an atmosphere comprising inert gas and/or said volatile bifunctional monomers, from sorption temperature to 210 °C, whereupon the free-radical generators are decomposed and then
(e) heating the melt up to 280 °C in order to remove unreacted monomers and decomposition products, and
(f) agglomerating the melt.
- Paragraph 35:: Foam, film, melt coated or blown article comprising a polymer composition according to any one of the preceding paragraphs 1 to 30.

The present invention will now be described in further detail by the examples provided below.

### EXAMPLES

### 1. Definitions/Measuring Methods

The following definitions of terms and determination methods apply for the above general description of the invention as well as to the below examples unless otherwise defined.

**Number average molecular weight (Mₙ), weight average molecular weight (M_{w}) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**MFR₂ (230 °C)** is measured according to ISO 1133 (230 °C, 2.16 kg load).

**MFR₂ (190 °C)** is measured according to ISO 1133 (190 °C, 2.16 kg load).

**Comonomer content** is measured with Fourier transform infrared spectroscopy (FTIR) calibrated with ¹³C-NMR. When measuring the ethylene content in polypropylene, a thin film of the sample (thickness about 250 mm) was prepared by hot-pressing. The area of -CH₂-absorption peak (800-650 cm⁻¹) was measured with Perkin Elmer FTIR 1600 spectrometer. The method was calibrated by ethylene content data measured by ¹³C-NMR.

**Intrinsic viscosity** is measured according to DIN ISO 1628/1, October 1999 (in Decalin at 135 °C).

**Flexural modulus** is measured according to ISO 180.

**Charpy impact test**: The charpy notched impact strength (Charpy NIS) is measured according to ISO 179 1eA at 23 °C and-20 °C, respectively.

**The xylene solubles (XS, wt.-%):** Analysis according to the known method: 2.0 g of polymer is dissolved in 250 ml p-xylene at 135°C under agitation. After 30±2 minutes the solution is allowed to cool for 15 minutes at ambient temperature (21 °C) and then allowed to settle for 30 minutes at 25±0.5°C. The solution is filtered and evaporated in nitrogen flow and the residue dried under vacuum at 90 °C until constant weight is reached.
XS% = (100 x m₁ x v₀) / (m₀ x v₁), wherein
m₀ = initial polymer amount (g)
m₁ = weight of residue (g)
v₀ = initial volume (ml)
V₁= volume of analyzed sample (ml)

**Density** is measured according to ISO 1183-1:2004 at +23 °C using the immersion method on polymer granules

### Strain hardening behaviour (melt strength):

The strain hardening behaviour is determined by the method as described in the article "Rheotens-Mastercurves and Drawability of Polymer Melts", M. H. Wagner, Polymer Engineering and Sience, MID-APRIL 1SW, Vol. 36, NO. 7, pages 925 to 935. The content of the document is included by reference.

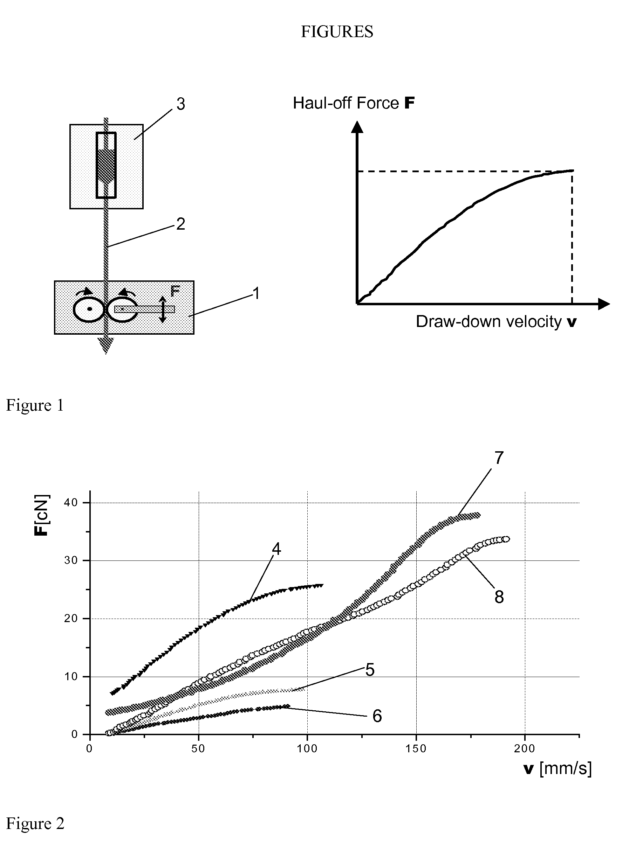

For detailed explanation of the measuring method it is also referred to the figures 1 and 2.

Figure 1 shows a schematic representation of the experimental procedure which is used to determine strain hardening.

The strain hardening behaviour of polymers is analysed by Rheotens apparatus (1) (product of Göttfert, Siemensstr.2, 74711 Buchen, Germany) in which a melt strand (2) is elongated by drawing down with a defined acceleration. The haul-off force F in dependence of draw-down velocity v is recorded.

The test procedure is performed in a standard climatized room with controlled room temperature of 23 °C. The Rheotens apparatus (1) is combined with an extruder/melt pump (3) for continuous feeding of the melt strand (2). The extrusion temperature is 200 °C; a capillary die with a diameter of 2 mm and a length of 6 mm is used. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions.The acceleration of the melt strand (2) drawn down is 120 mm/sec².

The Rheotens was operated in combination with the PC program EXTENS. This is a real-time data-acquisition program, which displays and stores the measured data of tensile force and drawdown speed.

The schematic diagram in figure 1 shows in an exemplary fashion the measured increase in haul-off force F (i.e. "melt strength") versus the increase in draw-down velocity v (i.e. "drawability").

Figure 2 shows the recorded curves of Rheotens measurements of polymer samples with and without strain hardening behaviour. The maximum points (Fmax; vmax) at failure of the strand are characteristic for the strength and the drawability of the melt.

The standard propylene polymers 4,5,6 with melt indices of 0.3, 2.0 and 3.0 g/10 min at 230°C/2.16 kg show a very low melt strength and low drawability. They have no strain hardening.

Modified propylene polymer 7 (melt index of sample in diagram is 2 to 3 g/10 min at 230°C/2.16 kg) or LDPE 8 (melt index of sample in diagram is 0.7 g/10 min at 230°C/2.16 kg) show a completely different drawability versus melt strength behaviour. With increasing the draw down velocity v the haul-off force F increases to a much higher level, compared to the standard propylene polymers 4,5,6. This curve shape is characteristic for strain hardening.

**The crosslinked fraction** is assumed to be identical to the xylene hot insoluble (XHI) fraction, which is determined by extracting 1 g of finely cut polymer sample with 500 ml xylene in a Soxleth extractor for 48 hours at the boiling temperature. The remaining solid amount is dried at 90°C and weighed for determining the insolubles amount.

### EXAMPLES

**Preperation of the Examples**: The mixtures for the Examples were all prepared on a COLLIN Z50 twin screw extruder with a melt temperature profile between 200 and 220 °C at 200 rotations per minute and 10 kg/h throughput, followed by strand cooling in a water-bath and pelletization.

**Table 1: Properties of the components**

| | | **EP-HECO** | **HMS-PP** | **Linear-PP** | **LDPE** | **HDPE** |
|---|---|---|---|---|---|---|
| | | **BC250MO** | **WB135HMS** | **HC600TF** | **FT5240** | **FL5580** |
| MFR (230°C; 2,16kg) | g/10min | 4 | 2,5 | 2,5 | - | - |
| MFR (190°C; 2,16kg | g/10min | - | - | - | 0,75 | 1,2 |
| Rheotens (200°C; 120mm) | cN | - | 28,6 | 8,2 | - | - |
| Rheotens (200°C; 120mm) | mm/s | - | 255 | 162 | - | - |
| density | kg/m³ | 905 | 905 | 905 | 923 | 958 |
| XS | wt.-% | 25 | - | - | - | - |
| C2 | wt.-% | 12 | - | - | - | - |
| g' | | - | 0,8 | - | - | - |
| cross linked fraction | wt.% | - | <0,1 | - | - | - |
| Flexural modulus | MPa | - | 1764 | 1600 | - | - |
| CharpyNIS (+23 °C) | kJ/m² | 20 | 8,1 | 8,6 | - | - |
| CharpyNIS (-20 °C) | kJ/m² | 7,5 | 2,1 | 2,0 | - | - |

**Table 2: Compositions with HMS-PP and polyethylene**

| **Composition** | | | **E 1** | **CE 1** | **CE 2** |
|---|---|---|---|---|---|
| HMS-PP | | wt.-% | 70 | 70 | 0 |
| Linear-PP | | wt.-% | - | 0 | 70 |
| PE | HDPE | wt.-% | - | 30 | - |
| PE | LDPE | wt.-% | 30 | - | 30 |

| **Property** | | | | | |
|---|---|---|---|---|---|
| MFR | (230°C; 2,16kg) | g/10min | 5.1 | 4.7 | 3.4 |
| density | | kg/m³ | 924 | 958 | 924 |
| Rheotens | 200°C/120mm | cN | 16,8 | 12,3 | 11,0 |
| | 200°C/120mm | mm/s | 256 | 238 | 228 |
| Flexural modulus | | MPa | 1208 | 1581 | 1027 |
| Charpy NIS | +23 °C | kJ/m² | 21,5 | 10,9 | 9,8 |
| | - 20 °C | kJ/m² | 3,6 | 2,6 | 2,1 |

**Table 3: Compositions with HMS-PP, polyethylene and heterophasic propylene copolymer**

| **Composition** | | | **E 2** | **E 3** | **E 4** | **CE 3** | **CE 4** | **CE 5** |
|---|---|---|---|---|---|---|---|---|
| EP-HECO | | | 40 | 40 | 60 | 60 | 60 | 100 |
| HMS-PP | | | 30 | 40 | 20 | 40 | 0 | 0 |
| LDPE | | | 30 | 20 | 20 | 0 | 40 | 0 |

| **Property** | | | | | | | | |
|---|---|---|---|---|---|---|---|---|
| density | | kg/m³ | 910 | 909 | 909 | 905 | 912 | 905 |
| MFR | 230°C; 2,16kg | g/10min | 3,4 | 3,7 | 3,5 | 4,3 | 3,4 | - |
| Rheotens | 200°C;120mm | cN | 19,9 | 13,2 | 9,5 | 10,9 | 21,1 | 5,7 |
| | 200°C/120mm | mm/s | 239 | 234 | 217 | 225 | 238 | 143 |
| Flexural modulus | | MPa | 950,1 | 1129,8 | 980 | 1428 | 574,5 | 1104,9 |
| Charpy NIS | +23°C | kJ/m² | 61,4 | 55,7 | 69,1 | 15,8 | 80,3 | 32,8 |
| | -20°C | kJ/m² | 5,5 | 5 | 7,5 | 5 | 8,1 | 6,9 |

## Claims

1. Polymer composition comprising
(a) polypropylene (B) with a branching index g' of 0.9 or less,
(b) a low density polyethylene (LDPE), and
(c) a heterophasic propylene compolymer composition (C).

2. Polymer composition according to claim 1, wherein the polypropylene (B) is a propylene homopolymer.

3. Polymer composition according to claim 1 or 2, wherein the polypropylene (B) has a melt strength of at least 10 cN at a maximum speed of at least 200 mm/s.

4. Polymer composition according to any one of the preceding claims, wherein the polypropylene (B) has melt strength of at least 20 cN at a maximum speed of at least 200 mm/s.

5. Polymer composition according to any one of the preceding claims, wherein the polypropylene (B) has a MFR₂ (230 °C) in a range of 0.05 to 10.00 g/10 min measured according to ISO 1133.

6. Polymer composition according to any one of the preceding claims, wherein the polypropylene (B) has been obtained by treating an unmodified polypropylene (A) with a peroxide and optionally with a bifunctional monomer.

7. Polymer composition according to claim 6, wherein the unmodified polypropylene
(A) has a weight average molecular weight M_{w} of 500,000 to 1,500,000 g/mol measured according to ISO 16014.

8. Polymer composition according to claim 6 or 7, wherein the unmodified polypropylene (A) has a molecular weight distribution (MWD) of 5 to 60 measured according to ISO 16014.

9. Polymer composition according to any one of the preceding claims 6 to 8, wherein the unmodified polypropylene (A) has a MFR₂ (230 °C) in a range of 0.05 to 45.00 g/10 min measured according to ISO 1133.

10. Polymer composition according to any one of the preceding claims 6 to 9, wherein the unmodified polypropylene (A) is a propylene homopolymer.

11. Polymer composition according to any one of the preceding claims 6 to 10, wherein the bifunctional monomer is selected from the group consisting of butadiene, isoprene, dimethylbutadiene and divinylbenzene.

12. Polymer composition according to any one of the preceding claims 6 to 11, wherein the peroxide is selected from the group consisting of acyl peroxide, alkyl peroxide, hydroperoxide, perester and peroxycarbonate.

13. Polymer composition according to any one of the preceding claims 6 to 12, wherein the amount of peroxide is in the range of 0.05 to 3.00 wt.-% based on the unmodified polypropylene

14. Polymer composition according to any one of the preceding claims, wherein the cross-linked fraction of the polypropylene (B) does not exceed 1.0 wt.-%.

15. Polymer composition according to any one of the preceding claims, wherein the low density polyethylene (LDPE) has a MFR₂ (190 °C) in a range of 0.10 to 10.00 g/10 min measured according to ISO 1133.

16. Polymer composition according to any one of the preceding claims, wherein the low density polyethylene (LDPE) has a density in the range of 910 to 940 kg/m³.

17. Polymer composition according to any one of the preceding claims, wherein the comonomer of the heterophasic copolymer composition (C) is ethylene and/or butene.

18. Polymer composition according to any one of the preceding claims, wherein the comonomer content in the heterophasic propylene copolymer composition (C) is up to 50.0 wt.-%.

19. Polymer composition according to any one of the preceding claims, wherein the heterophasic propylene copolymer composition (C) has a MFR₂ (230 °C) in a range of 0.1 to 40.00 g/10 min measured according to ISO 1133.

20. Polymer composition according to any one of the preceding claims, wherein the heterophasic copolymer composition (C) comprises
(a) a propylene polymer matrix and
(b) an ethylene-propylene-rubber (EPR).

21. Polymer composition according to claim 20, wherein the heterophasic propylene copolymer composition (C) comprises up to 30 wt.-% ethylene-propylene-rubber (EPR).

22. Polymer composition according to claim 20 or 21, wherein the propylene polymer matrix is a propylene homopolymer

23. Polymer composition according to claim 20 or 21, wherein the propylene polymer matrix is a propylene copolymer.

24. Polymer composition according to claim 23, wherein the comonomer content in the propylene polymer matrix is up to 8.0 wt-%.

25. Polymer composition according to any one of the preceding claims 20 to 24, wherein the ethylene content in the ethylene-propylene-rubber (EPR) is up to 50 wt.-%.

26. Polymer composition according to any one of the preceding claims, wherein said composition comprises
(a) at least 5.0 wt.-% of the polypropylene (B),
(b) at least 20 wt.-% of the low density polyethylene (LDPE), and
(c) up to 70 wt.-% the heterophasic propylene copolymer composition (C), wherein the weight percentages are based on the polymer components present in the polymer composition, preferably on the components of (a), (b) and (c).

27. Polymer composition according to any one of the preceding claims, wherein the polymer composition has a MFR₂ (230 °C) in a range of 1.0 to 100.0 g/10 min measured according to ISO 1133.

28. Polypropylene composition according to any one of the preceding claims, wherein the polymer composition has flexural modulus of at least 900 MPa measured according to ISO 180.

29. Polymer composition according to any one of the preceding claims, wherein the polymer composition has impact strength measured according to the Charpy impact test according to ISO 179 (1eA) at 23 °C of at least 50.0 kJ/m² and/or impact strength measured according to the Charpy impact test according to ISO 179 (1eA) at -20 °C of at least 5.0 kJ/m².

30. Use of a polymer composition according to any one of the preceding claims for foaming, extrusion coating and blow moulding, like extrusion blow moulding.

31. Use of a polymer composition according to any one of the preceding claims 1 to 29 as part of a foam, a film or a blown article.

32. Process for the manufacture of a polymer composition according to any one of the preceding claims 1 to 29 comprising the step of mixing
(a) the propylene homopolymer (B),
(b) the low density polyethylene (LDPE), and
(c) the heterophasic propylene copolymer composition (C).

33. Process according to claim 32, wherein the propylene homopolymer (B) is produced by
(a) mixing
(i) a unmodified propylene homopolymer (A) or unmodified propylene copolymer (A), preferably a unmodified propylene homopolymer with a weight average molecular weight M_{w} of 500,000 to 1,500,000 g/mol,
(ii) from 0.05 to 3 wt.-% based on the components of (i) and (ii), of a peroxide selected from the group consisting of acyl peroxide, alkyl peroxide, hydroperoxide, perester and peroxycarbonate, and
(iii) optionally diluted with inert solvents,
(b) heating to 30-100 °C, preferably to 60-90 °C,
(c) sorption of volatile bifunctional monomers, preferably ethylenically unsaturated, multifunctional monomers, like C4 to C10 dienes and/or C7 to C10 divinyl compounds, by the propylene homopolymer (A) from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the unmodified propylene homopolymer (A) or unmodified propylene copolymer (A),
(d) heating and melting the polypropylene composition in an atmosphere comprising inert gas and/or said volatile bifunctional monomers, from sorption temperature to 210 °C, whereupon the free-radical generators are decomposed and then
(e) heating the melt up to 280°C in order to remove unreacted monomers and decomposition products, and
(f) agglomerating the melt.

34. Foam, film, melt coated or blown article comprising a polymer composition according to any one of the preceding claims 1 to 29.

## Amended claims

### Amended claims in accordance with Rule 137(2) EPC.

**1.** Polymer composition comprising
(a) at least 5.0 wt.-% of a polypropylene (B) with a branching index g' of 0.9 or less,
(b) at least 20 wt.% of a low density polyethylene (LDPE), and
(c) up to 70 wt.-% an heterophasic propylene compolymer composition (C) wherein the weight percentages are based on the polymer components present in the polymer composition, preferably on the components of (a), (b) and (c)..

**2.** Polymer composition according to claim 1, wherein the polypropylene (B) is a propylene homopolymer.

**3.** Polymer composition according to claim 1 or 2, wherein the polypropylene (B) has a melt strength of at least 10 cN at a maximum speed of at least 200 mm/s.

**4.** Polymer composition according to any one of the preceding claims, wherein the polypropylene (B) has melt strength of at least 20 cN at a maximum speed of at least 200 mm/s.

**5.** Polymer composition according to any one of the preceding claims, wherein the polypropylene (B) has a MFR₂ (230°C) in a range of 0.05 to 10.00 g/10 min measured according to ISO 1133.

**6.** Polymer composition according to any one of the preceding claims, wherein the polypropylene (B) has been obtained by treating an unmodified polypropylene (A) with a peroxide and optionally with a bifunctional monomer.

**7.** Polymer composition according to claim 6, wherein the unmodified polypropylene
(A) has a weight average molecular weight M_{w} of 500,000 to 1,500,000 g/mol measured according to ISO 16014.

**8.** Polymer composition according to claim 6 or 7, wherein the unmodified polypropylene (A) has a molecular weight distribution (MWD) of 5 to 60 measured according to ISO 16014.

**9.** Polymer composition according to any one of the preceding claims 6 to 8, wherein the unmodified polypropylene (A) has a MFR₂ (230 °C) in a range of 0.05 to 45.00 g/10 min measured according to ISO 1133.

**10.** Polymer composition according to any one of the preceding claims 6 to 9, wherein the unmodified polypropylene (A) is a propylene homopolymer.

**11.** Polymer composition according to any one of the preceding claims 6 to 10, wherein the bifunctional monomer is selected from the group consisting of butadiene, isoprene, dimethylbutadiene and divinylbenzene.

**12.** Polymer composition according to any one of the preceding claims 6 to 11, wherein the peroxide is selected from the group consisting of acyl peroxide, alkyl peroxide, hydroperoxide, perester and peroxycarbonate.

**13.** Polymer composition according to any one of the preceding claims 6 to 12, wherein the amount of peroxide is in the range of 0.05 to 3.00 wt.-% based on the unmodified polypropylene

**14.** Polymer composition according to any one of the preceding claims, wherein the cross-linked fraction of the polypropylene (B) does not exceed 1.0 wt.-%.

**15.** Polymer composition according to any one of the preceding claims, wherein the low density polyethylene (LDPE) has a MFR₂ (190 °C) in a range of 0.10 to 10.00 g/10 min measured according to ISO 1133.

**16.** Polymer composition according to any one of the preceding claims, wherein the low density polyethylene (LDPE) has a density in the range of 910 to 940 kg/m³.

**17.** Polymer composition according to any one of the preceding claims, wherein the comonomer of the heterophasic copolymer composition (C) is ethylene and/or butene.

**18.** Polymer composition according to any one of the preceding claims, wherein the comonomer content in the heterophasic propylene copolymer composition (C) is up to 50.0 wt.-%.

**19.** Polymer composition according to any one of the preceding claims, wherein the heterophasic propylene copolymer composition (C) has a MFR₂ (230 °C) in a range of 0.1 to 40.00 g/10 min measured according to ISO 1133.

**20.** Polymer composition according to any one of the preceding claims, wherein the heterophasic copolymer composition (C) comprises
(a) a propylene polymer matrix and
(b) an ethylene-propylene-rubber (EPR).

**21.** Polymer composition according to claim 20, wherein the heterophasic propylene copolymer composition (C) comprises up to 30 wt.-% ethylene-propylene-rubber (EPR).

**22.** Polymer composition according to claim 20 or 21, wherein the propylene polymer matrix is a propylene homopolymer

**23.** Polymer composition according to claim 20 or 21, wherein the propylene polymer matrix is a propylene copolymer.

**24.** Polymer composition according to claim 23, wherein the comonomer content in the propylene polymer matrix is up to 8.0 wt-%.

**25.** Polymer composition according to any one of the preceding claims 20 to 24, wherein the ethylene content in the ethylene-propylene-rubber (EPR) is up to 50 wt.-%.

**26.** Polymer composition according to any one of the preceding claims, wherein the polymer composition has a MFR₂ (230 °C) in a range of 1.0 to 100.0 g/10 min measured according to ISO 1133.

**27.** Polypropylene composition according to any one of the preceding claims, wherein the polymer composition has flexural modulus of at least 900 MPa measured according to ISO 180.

**28.** Polymer composition according to any one of the preceding claims, wherein the polymer composition has impact strength measured according to the Charpy impact test according to ISO 179 (1eA) at 23 °C of at least 50.0 kJ/m² and/or impact strength measured according to the Charpy impact test according to ISO 179 (1eA) at -20 °C of at least 5.0 kJ/m².

**29.** Use of a polymer composition according to any one of the preceding claims for foaming, extrusion coating and blow moulding, like extrusion blow moulding.

**30.** Use of a polymer composition according to any one of the preceding claims 1 to 28 as part of a foam, a film or a blown article.

**31.** Process for the manufacture of a polymer composition according to any one of the preceding claims 1 to 28 comprising the step of mixing
(a) the propylene homopolymer (B),
(b) the low density polyethylene (LDPE), and
(c) the heterophasic propylene copolymer composition (C).

**32.** Process according to claim 31, wherein the propylene homopolymer (B) is produced by
(a) mixing
(i) a unmodified propylene homopolymer (A) or unmodified propylene copolymer (A), preferably a unmodified propylene homopolymer with a weight average molecular weight M_{w} of 500,000 to 1,500,000 g/mol,
(ii) from 0.05 to 3 wt.-% based on the components of (i) and (ii), of a peroxide selected from the group consisting of acyl peroxide, alkyl peroxide, hydroperoxide, perester and peroxycarbonate, and
(iii) optionally diluted with inert solvents,
(b) heating to 30-100 °C, preferably to 60-90 °C,
(c) sorption of volatile bifunctional monomers, preferably ethylenically unsaturated, multifunctional monomers, like C4 to C10 dienes and/or C7 to C 10 divinyl compounds, by the propylene homopolymer (A) from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the unmodified propylene homopolymer (A) or unmodified propylene copolymer (A),
(d) heating and melting the polypropylene composition in an atmosphere comprising inert gas and/or said volatile bifunctional monomers, from sorption temperature to 210 °C, whereupon the free-radical generators are decomposed and then
(e) heating the melt up to 280 °C in order to remove unreacted monomers and decomposition products, and
(f) agglomerating the melt.

**33.** Foam, film, melt coated or blown article comprising a polymer composition according to any one of the preceding claims 1 to 28.
